# EUROPEAN PATENT APPLICATION

(11) **EP 2 741 494 A1**
(43) Date of publication of application: **11.06.2014**
(21) Application number: 12819543.5
(22) Date of filing: 27.07.2012
(51) Int. Cl.: H04N 5/91, G11B 27/00, G11B 27/10, H04N 5/225

(54) **VIDEO INFORMATION CAPTURING DEVICE**

(30) Priority: 02.08.2011 JP 2011168936
(71) Applicant: Panasonic Corporation, Kadoma-shi, Osaka 571-8501 (JP)
(72) Inventor: NAKATANI, Tokuo, Osaka 540-6207 (JP); SASAKI, Miyuki, Osaka 540-6207 (JP); KAWASAKI, Kojiro, Osaka 540-6207 (JP)
(74) Representative: Eisenführ Speiser
(86) International application number: PCT/JP2012/004811
(87) International publication number: WO 2013/018345

(57) **Abstract**

A video information capturing device for capturing video information from a first recording medium, includes a second recording medium for storing video information, an acquiring section for acquiring the video information from a first recording medium and storing the video information in the second recording medium, and a recording section for recording, in the second recording medium, information about the shooting date and length of reproduction time of a final chapter in the acquired video information The acquiring section searches the first recording medium for a chapter that has the same shooting date and the same reproduction time length as those indicated by the information about the shooting data and reproduction time length stored in the second recording medium. When the chapter is found, the acquiring section acquires, from the first recording medium, only a chapter having a shooting date later than that of the found chapter in the playlist including the found chapter, and records the acquired chapter in the second recording medium.

## Description

### Technical Field

The present disclosure relates to a capturing device for copying to introduce video information therein from a recording medium storing the video information.

### Background Art

Video information shot by a digital movie camera is recorded in a removable recording medium such as a memory card. The video information recorded in the recording medium can be copied from the recording medium by an information processing device (data capturing device) such as PC (personal computer), and introduced into the information processing device.

Storage capacity of a recording medium is increasing year by year. In such a condition, a digital movie camera and a recording medium and a data capturing device are used by a user as follows.

First, the user shoots video information with a digital movie camera loading with a recording medium. The shot video information is recorded in the recording medium. The user introduces the video information recorded in the recording medium into a data capturing device such as a PC. At this time, the video information introduced into the data capturing device still remains in the recording medium. Thereafter, when the user again attaches the recording medium to the digital movie camera and shoots new video information, the new video information is additionally recorded in the recording medium. At this time, the new video information, namely, non-introduced video information and the introduced video information are mixed in the recording medium. Thereafter, in order to introduce the new video information into the data capturing device, the user selects video information to be introduced out of the video information stored in the recording medium.

The work for selecting a subject to be introduced is complicated for the user. For this reason, it is desired to automatically select only new video information (hereinafter, "difference information") that is not yet introduced and to introduce it into the data capturing device.

As to the introducing of difference information, Patent Document 1 discloses a technique for introducing image data recorded in a recording medium. Concretely, in Patent Document 1, still image data (photography data) shot by a digital still camera is copied into the data capturing device via the recording medium. When introducing the still image data, the data capturing device stores information having a maximum ID of file IDs of the still image data. As a result, when introducing the still image data form the same recording medium next time, the data capturing device can introduce only new still image data therein.

### Prior Art Document

Patent Document
Patent Document 1: Japanese Patent Application Laid-Open No. 2006-345218

### Summary of Invention

### Problem to be Solved by the Invention

The present disclosure provides a technique for introducing the difference information of video information (moving image data) recorded in a recording medium more accurately.

### Means for Solving the Problem

The present disclosure provides a video information capturing device for introducing video information therein from a first recording medium for managing plural pieces of video information in chapter unit and managing the plurality of chapters in one playlist. The video information capturing device includes a second recording medium for storing video information, an acquiring section for acquiring the video information from the first recording medium and storing the video information in the second recording medium, and a recording section for recording information about a shooting date and information about a reproduction time length of a final chapter in the video information acquired by the acquiring section, in the second recording medium. The acquiring section searches the first recording medium for a chapter having the same shooting date and the same reproduction time length as those indicated by the information about the shooting date and the information about the reproduction time length stored in the second recording medium. When the chapter is found, the acquiring section acquires, from the first recording medium, only a chapter having a shooting date later than that of the found chapter in a playlist including the found chapter, and records the acquired chapter in the second recording medium.

### Effect of the Invention

According to the configuration of the present disclosure, the video information capturing device can introduce therein more accurately the difference information of video information recorded in a recording medium.

### Brief Description of Drawings

Fig. 1 is a diagram illustrating an example of a reproduction display system according to a first embodiment;
Fig. 2 is a diagram illustrating an exemplary configuration of a reproduction device according to the first embodiment;
Fig. 3 is a diagram illustrating a file structure of video information according to the first embodiment;
Figs. 4A and 4B are diagrams for describing a management unit of the video information according to the first embodiment;
Fig. 5 is a diagram illustrating video information to be introduced into the reproduction device according to the first embodiment;
Figs. 6A and 6B are diagrams for describing a pattern of a playlist of the video information;
Fig. 7 is a flowchart illustrating an exemplary operation of the reproduction device according to the first embodiment;
Fig. 8 is a diagram illustrating a memory state before the introducing process in the reproduction device according to the first embodiment;
Fig. 9 is a diagram illustrating a memory state after the introducing process in the reproduction device according to the first embodiment;
Fig. 10 is a diagram for describing the introducing process of the reproduction device according to the first embodiment;
Fig. 11 is a diagram for describing the process of the reproduction device according to the first embodiment;
Fig. 12 is a diagram for describing the process of the reproduction device according to the first embodiment;
Fig. 13 is a diagram illustrating an example of modification of management information (playlist) in the reproduction device according to the first embodiment;
Figs. 14A and 14B are diagrams illustrating an example of list display (pattern A) in the reproduction device according to the first embodiment; and
Figs. 15A to 15C are diagrams illustrating an example of the list display (pattern B) on the reproduction device according to the first embodiment.

### Mode for Carrying Out the Invention

An embodiment is described in detail below with reference to drawings. Description that is more detailed than necessary would be occasionally omitted. For example, detailed description about well-known matters and overlapped description about substantially identical constitutions would be occasionally omitted. This is for preventing the following description from being more unnecessarily redundant and for causing the persons skilled in the art to understand easily.

The inventor(s) provides the accompanying drawings and the following description in order to help the persons skilled in the art to sufficiently understand the present disclosure, and the description is not intended to limit subject matters described in claims.

### First Embodiment

### 1. Configuration of Reproduction Display System

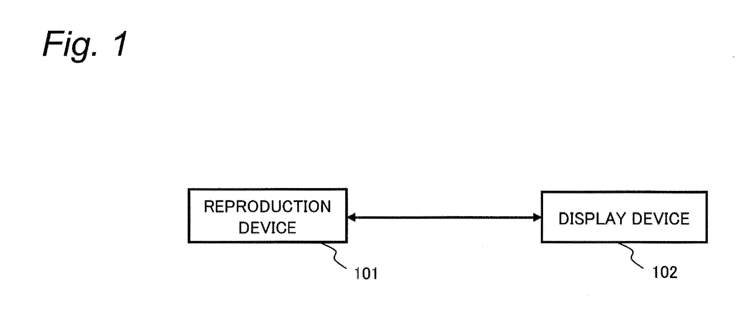

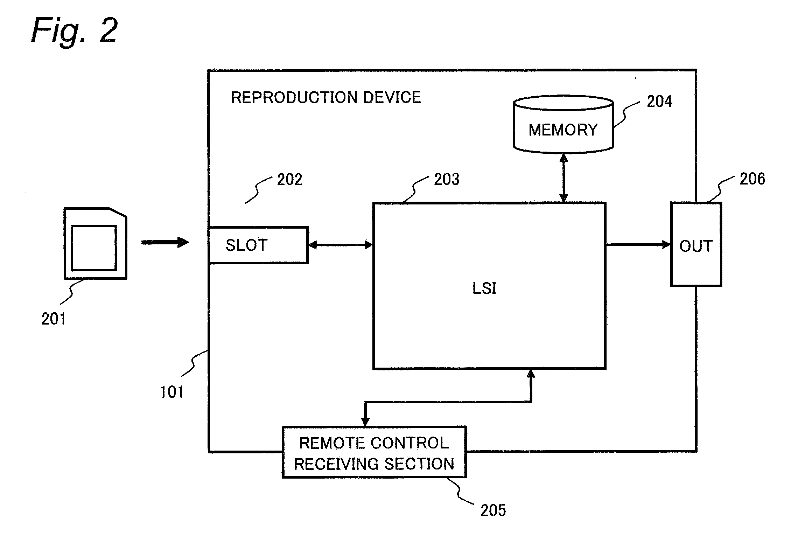

A configuration of a reproduction display system is described with reference to Figs. 1 and 2. Fig. 1 illustrates a configuration of the reproduction display system. The reproduction display system can reproduce video information (moving image data) which is recorded in a memory card by a video recording device such as a digital movie camera. The reproduction display system includes a reproduction device 101 and a display device 102. Fig. 2 is a diagram illustrating a configuration of the reproduction device 101. The reproduction device 101 copies and introduces therein video information from a memory card 201. The reproduction device 101 stores the copied video information in an internal memory 204. The memory 204 can be realized by a recording medium such as HDD or SSD. Further, the reproduction device 101 outputs the video information stored in the memory 204 to the display device 102 according to user°s instructions. The display device 102 can be realized by a display monitor made of liquid crystal display device, PDP, organic EL, or the like. The reproduction device 101 and the display device 102 can communicate with each other via a wired or wireless communication line.

The memory card 201 is a recording medium that is attachable to the digital movie camera. The memory card 201 includes a controller and a nonvolatile memory, and has a specific card ID.

### 2. Reproduction Device

A configuration of the reproduction device 101 is described with reference to Fig. 2. The reproduction device 101 has a memory card slot 202, an LSI 203, the memory 204, a remote control receiving section 205, and an output section 206. The remote control receiving section 205 receives instructions such as start of reproduction and stop of reproduction, from viewers. The memory card 201 is inserted into the memory card slot 202. The LSI 203 records the video information read from the memory card 201 in the memory 204 via the memory card slot 202. The output section 206 is an interface (IF) for exchanging data with the display device 102.

The LSI 203 has a decoder, a memory interface, a stream control block, a CPU, and an internal memory. In this embodiment, the CPU of the LSI 203 realizes predetermined functions by executing a predetermined program, but the LSI 203 may be configured only by a hardware circuit so as to realize the predetermined functions.

### 3. Video Information

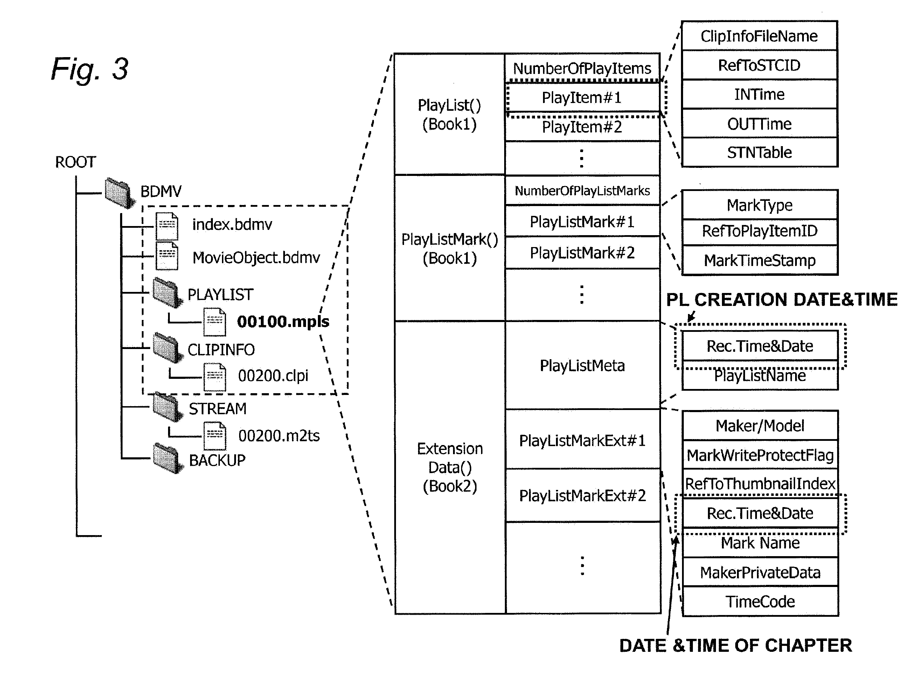

The video information reproduced by the reproduction device 101 is described. The video information is recorded by, for example, the digital movie camera (the video recording device). In this embodiment, video information based on AVCHD standard is described as one example of the video information. Fig. 3 is a diagram illustrating a directory structure relating to the video information based on the AVCHD standard.

The video information is composed of video data and management information for managing video data. The management information represents a reproduction unit of video data. In this embodiment, as shown in Fig. 3, the video data corresponds to a file in a STREAM folder. The management information is composed of index.bdmv, MovieObject.bdmv, and files in a PLAYLIST folder and a CLIPINFO folder. Concrete description is given below.

In the directory structure relating to video information according to this embodiment, a BDMV folder is provided just below a ROOT directory. The BDMV folder includes Index.bdmv and MovieObject.bdmv.

Index.bdmv includes plural pieces of MovieTitlePlayListPair (for example, a playlist PL#1, a playlist PL#2, ...). MovieTitlePlayListPair includes PlayListFileName. PlayListFileName of MovieTitlePlayListPair specifies a file of a corresponding playlist. The AVCHD standard defines that the video information recorded by the digital movie camera is recorded so that the number of MovieTitlePlayListPair is numbered in ascending order. That is to say, the digital movie camera records the playlist PL#2 after recording the playlist PL#1. A timing at which next file of the playlist PL#2 is created after the recording of the playlist PL#1 depends on specification of the digital movie camera. The details of this is described later. In short, Index.bdmv can be regarded as a management file for managing playlists of video Information.

The BDMV folder further includes a PLAYLIST folder, a CLIPINFO folder, and a STREAM folder.

The PLAYLIST folder stores files of playlists to be used for reproducing streams. "XXXXX.mpls" is a file name of a playlist, and "XXXXX" is expressed by numerical values. As many Playlists as number corresponds to the numerical value indicated by "XXXXX" are stored in the PLAYLIST folder. The PLAYLIST folder stores files such as "00100.mpls", "00101.mpls", "00102.mpls", ... . "00100.mpls" is a file name specified by PlayListFileName of MovieTitlePlayListPair. The reproduction device 101 reproduces a stream according to file information in a playlist.

The CLIPINFO folder stores a file of a clip for linking a playlist with a stream. "YYYYY.clpi" indicates a file name of a clip, and "YYYYY" is expressed in numerical values. As many Clips as number corresponds to the numerical value indicated by "YYYYY" are stored in the CLIPINFO folder. The reproduction device 101 specifies a stream via a clip when the stream is reproduced in the playlist.

The STREM folder stores streams. "YYYYY.m2ts" indicates a file name of a stream, and "YYYYY" is expressed in numerical values. As many Clips as number corresponds to a numerical value indicated by "YYYYY" are stored in the STREM folder. A stream is encoded by a format of MPEG-TS. As to the file name "YYYYY.clpi" of a clip in the CLIPINFO folder and the file name "YYYYY.m2ts" of a stream in the STREM folder, portions "YYYYY" are made to match with each other. As a result, a corresponding stream file can be specified as the clip file based on "YYYYY" information. That is to say, clip file and stream file are related with each other by the file name.

The playlist "XXXXX.mpls" includes PlayList (), PlayListMark(), and ExtentionData(). PlayList() includes plural pieces of PlayItem, such as PlayItem#1, PlayItem#2, .... PlayItem is information representing one reproduction section of a video.

PlayItem includes ClipInfoFileName, INTime, OUTTime, and STNTable. INTime represents a reproduction start point of one reproduction section, and OUTTime represents a reproduction end point of one reproduction section, as time information. For example, numbers corresponding to predetermined system clocks are allocated to INTime and OUTTime, respectively. Differently from an actual value, for simple description, for example, when INTime indicates "5" and OUTTime indicates "10", reproduction of PlayItem is started at a time the system clock becomes "5" (INTime), and the reproduction of PlayItem is ended at a time the system clock becomes "10" (OUTTime).

PlayListMark() can include plural pieces of PlayListMark. For example, in Fig. 3, PlayListMark() includes PlayListMark#1, PlayListMark#2, .... PlayListMark is information representing a start point of a chapter of video information. That is to say, the digital movie camera records plural pieces of PlayListMark in PlayListMark () in order to specify the chapter. The chapter means one section that is recorded by continuous shooting. For example, the digital movie camera records a video which is shot by the user from a shooting start operation until a shooting end operation, as one chapter.

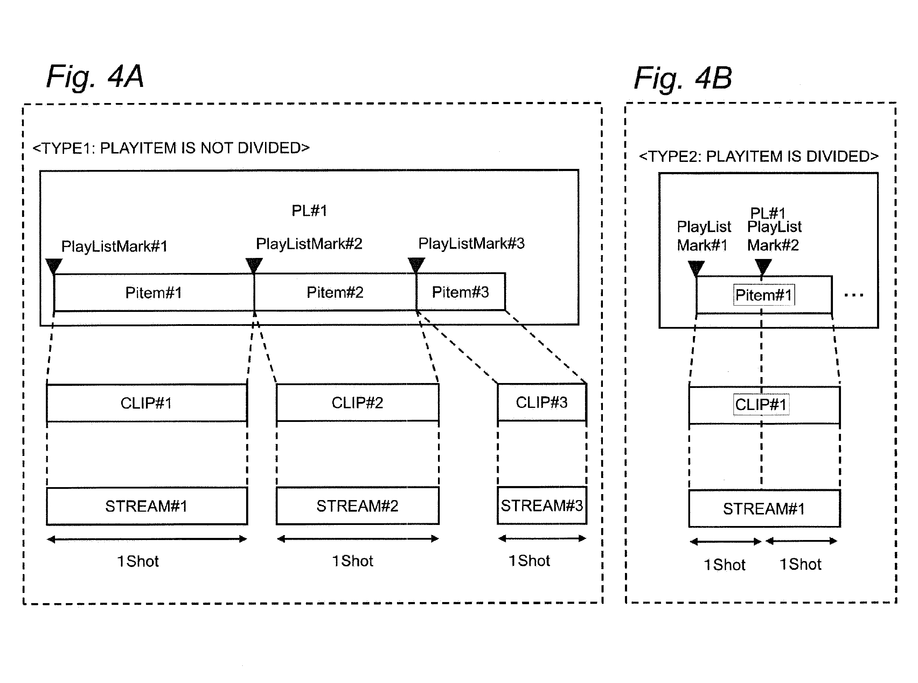

Fig 4 illustrates a recording format of plural pieces of PlayListMark. The recording format of PlayListMark includes two types of formats. The type 1 is a type which sets PlayListMark at the start point of PlayItem, for each PlayItem. The type 2 is a type which sets PlayListMark also in the middle of PlayItem.

In the type 1, the digital movie camera can specify a chapter in each shooting in a playlist. For example, when the user starts shooting in the digital movie camera and then ends the shooting, a video (PlayItem) is recorded as one chapter. When the user repeats the shooting in the digital movie camera, a plurality of videos is recorded in chapter unit. In the example of Fig. 4A, the chapter 1 (PlayItem#1) is recorded by the first shooting, and a chapter 2 (PlayItem#2) is recorded by the next shooting, and a chapter 3 (PlayItem#3) is recorded by the further next shooting. The chapters 1 to 3 are included in the playlist 1 (PL)#1. The chapter 1 corresponds to PlayListMark#1, the chapter 2 corresponds to PlayListMark#2, and chapter 3 corresponds to PlayListMark#3.

In the type 2, plural pieces of PlayListMark is specified for one PlayItem. For example, in the example of Fig. 4B, PlayListMark#1 and PlayListMark#2 are specified for PlayItem#1. Therefore, a plurality of chapters are allocated to one piece of PlayItem. Also in the type 2, the chapter 1 corresponds to PlayListMark#1, and the chapter 2 corresponds to PlayListmark#2.

Discrimination as to whether the type 1 or the type 2 can be made based on PlayListMark. Concretely, PlayListMark includes RefToPlayItemID indicating Playlem corresponding that PlayListMark. Therefore, when plural pieces of PlayListMark having RefToPlayItemID indicating the same PlayIem is present, the PLayIem can be discriminated as the type 2, and otherwise, discriminated as the type 1.

Further PlayListMark includes MarkTimeStamp. A numerical value corresponding to the predetermined system clock is allocated to MarkTimeStamp. For example, differently from an actual value, for simple description, when INTime is "5", MarkTimeStamp is also "5".

The idea of this embodiment can be applied to both the type 1 and type 2, but for convenience of the description, the case of the type 1 is described below.

Returning to Fig. 3, ExtentionData() includes PlayListMeta, and plural pieces of PlayListMarkExt corresponding to plural pieces of PlayListMark. For example, PlayListMeta and PlayListMarkExt#1, ... shown in Fig. 3 are included. PlayListMeta is metadata of a playlist, and includes Rec.Time&Date. Rec.Time&Date in PlayListMeta corresponds to a creating time and date of a playlist (for example, the playlist PL#1). For example, when the creating time and date is 19:1:2 on December 23, 2001, data such as 0x20011223190102 is stored in Rec.Time&Date. PlayListMarkExt is metadata of PlayListMark, and includes Rec.Time&Date. Rec.Time&Date in this PlayListMarkExt corresponds to the creating time and date of a chapter.

The digital movie camera records video information having the above configuration in the memory card 201.

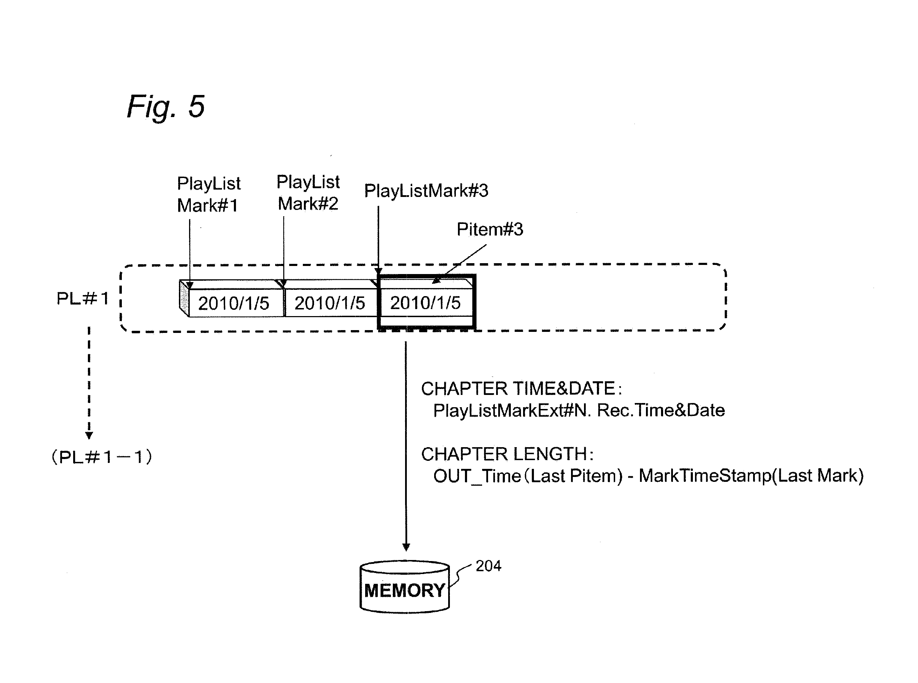

An example of the video information having the above configuration is described more concretely with reference to Figs. 4A, 4B and 5. As shown in Fig. 4A, the video information is composed of a stream, a clip, and a playlist. The stream is managed by one piece of playlist PL#1. Playlist PL#1 is provided with three playlist marks (PlayListMark#1 to PlayListMark#3), and are managed by three chapters. That is to say, as to video information, as shown in Fig. 5, it can be considered that three chapters are present in playlist PL#1, and three videos are present.

### 4. Recording of Video Information according to Specification of Digital Movie Camera

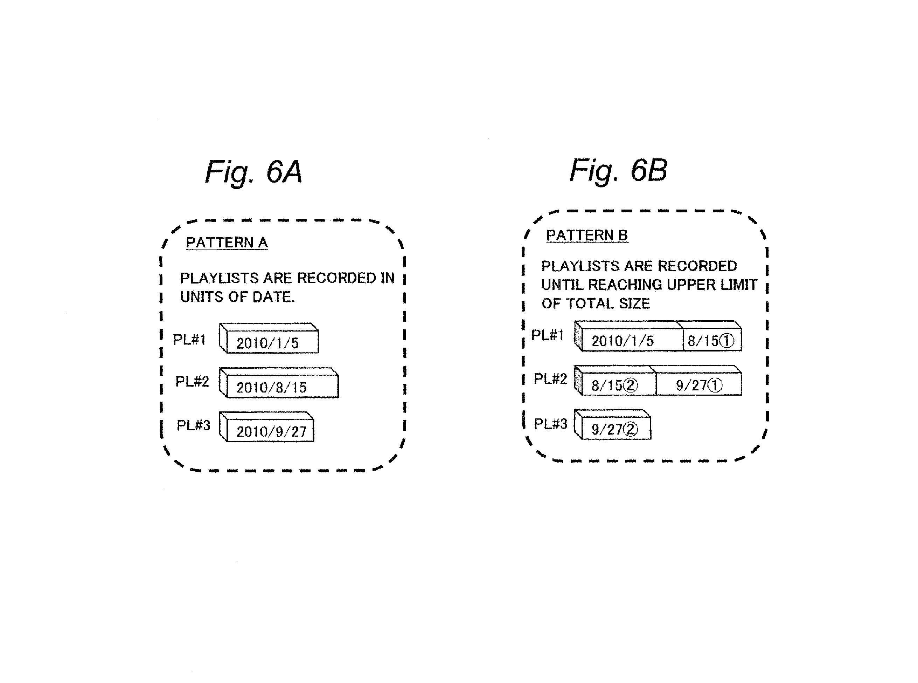

The digital movie camera can record video information according to the aforementioned directory configuration. It depends on specification of the digital movie camera that what kind chapter unit of video information is included in one playlist. Therefore, products that are on the market at the present include those which record video information in the following two patterns. The two patterns is described below with reference to Fig. 6.

### 4.1 Recording Method in Pattern A

The pattern A is for recording video information of chapter unit into a playlist, for each date. Concretely, in the pattern A, when plural pieces of video information are recorded in a playlist, the plural pieces of video information are recorded in one playlists until video information with a different recording date appears. In that case, when a total size of video information recorded in the playlist reaches an upper limit of a stream capable of being managed in the playlist, the recording shifts to the next playlist.

When video information is recorded in such a method, streams to be managed by one playlists are only video information with the same date. For example, in the example of Fig. 6A, The playlist PL#1 manages only video information recorded on January 5, 2010. The playlist PL#2 manages only video information, recorded on August 15, 2010. The playlists PL#3 manages only video information recorded on September 27, 2010.

The playlists includes one or a plurality of playlists marks, and manages video information in chapter unit. As a result, in the pattern A, the creating date of the playlists matches with the creating date of a chapter (playlist mark) included in this playlist.

### 4.2 Recording Method in Pattern B

The pattern B is for recording video information of a chapter unit in one playlist in shooting order until the total size of the video information recorded in the playlist reaches an upper limit. Therefore, in the pattern B, video information is recorded in one playlist so that the total size of video information is within the upper limit, and thus one playlist occasionally would include video information with different dates.

The playlist includes one or plurality of playlists marks, video information is managed in chapter unit. Video information of chapter unit is recorded in the playlist until the data amount reaches a predetermined upper limit of information amount. Therefore, chapters with the same creating date are occasionally included over two playlists. That is to say, in the pattern B, the creating date of the playlist would be occasionally different from the creating date of a chapter (playlist mark) included in the playlist.

For this reason, a playlist created on a certain date might include a chapter created on another date. For example, in the example of Fig. 6B, the playlist PL#1 manages video information on January 5, 2010 and August 15, 2010, and the playlist PL#2 manages video information on August 15, 2010 and September 27, 2010, and the playlist PL#3 manages video information on September 27, 2010.

In both the pattern A and the pattern B, instead of the condition that the total size reaches the upper limit, video information of chapter unit may be recorded in one playlist until a number of PlayItem recorded in the playlist reaches a predetermined value.

### 5. Problem of the present Embodiment

Normally, after video information is introduced into a reproduction device, a list according to dates is occasionally displayed on a display device. For example, when video information is displayed with the video information related to GUI of a calendar, video information is displayed according to dates. This is because the user mostly recognizes information according to dates.

For this reason, when the reproduction device introduces video information shot by the digital movie camera therein, it is considered to be preferable that the introducing is carried out in consideration of dates. When the reproduction device introduces video information shot by the digital movie camera therein, it is preferable to introduce only difference information that is video information not introduced yet in all pieces of video information recorded in the recording medium.

In the case where video information is recorded in a playlist in units of dates, like the pattern A, the introducing of difference information is easy, and list display of difference information is also easy.

On the other hand, in the case where a playlist includes chapters with a plurality of dates, like the pattern B, the introducing of difference information and the list display of video information are difficult. That is to say, the introducing of difference information requires discriminating of difference information in chapter unit, so that accurate introducing is difficult. Further, when chapters with the same date are present over two playlists in the list display, it is difficult to display information about these chapters in a divided manner.

Based on the above problem, an object of this embodiment is to provide the reproduction device for making the introducing of difference information and the list display of video information according to dates easy.

### 6. Operation for introducing Difference of Video Information

An example of the operation for introducing difference information of video information in the reproduction device 101 that solves the above problem according to this embodiment is described.

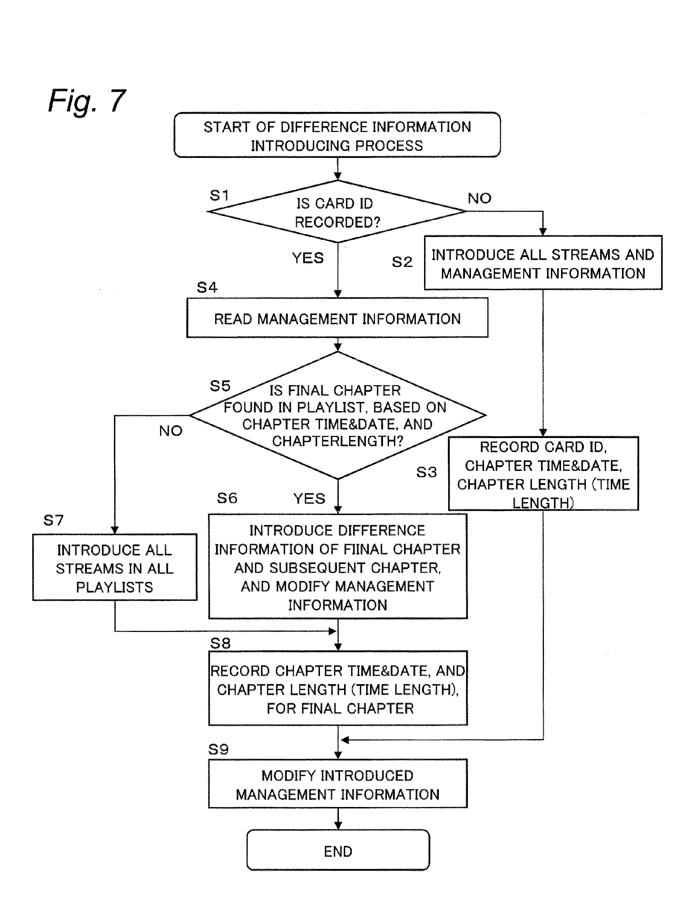

When receiving instructions for introducing difference information (instructions through an operation of a user interface) from the user, the reproduction device 101 starts a process shown in Fig. 7. The process shown in Fig. 7 is realized by the LSI 203 of the reproduction device 101.

At first, the LSI 203 reads a card ID from the memory card 201, and discriminates whether the card ID is recorded in the memory 204 (S1). When the card ID is not recorded in the memory 204, it is determined that the reproduction device 101 has not read video information from the memory card 201.

When the card ID is not recorded, the LSI 203 reads management information in a BDMV folder and all files (all streams) in a STREAM folder from the memory card 201, and records them in the memory 204 (S2). Concretely, the LSI 203 reads index.bdmv, MovieObject.bdmv, a clip, a playlist, and streams (playlist 1(PL#1), ...) and records them in the memory 204.

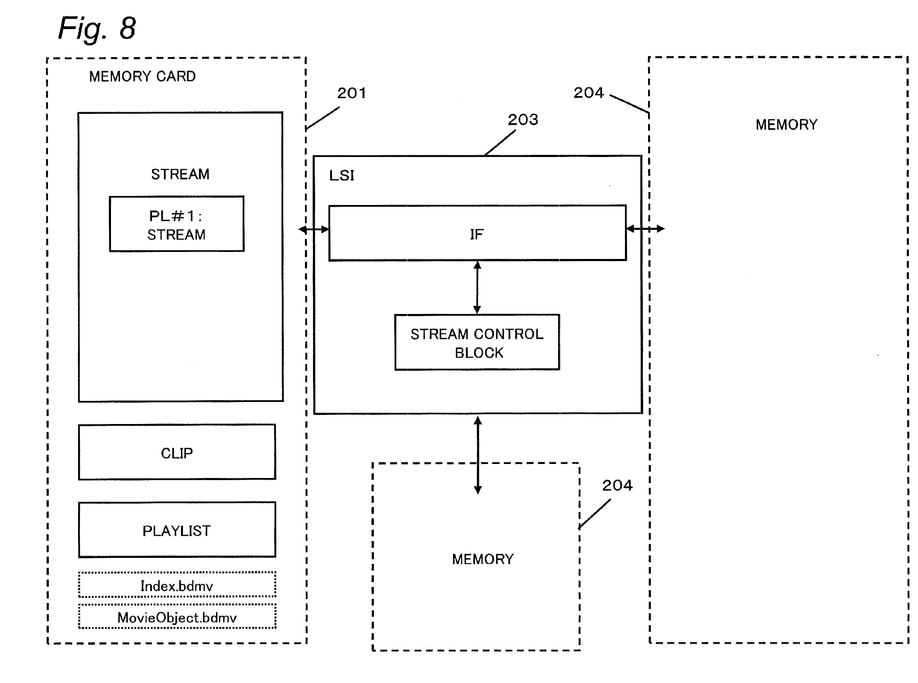

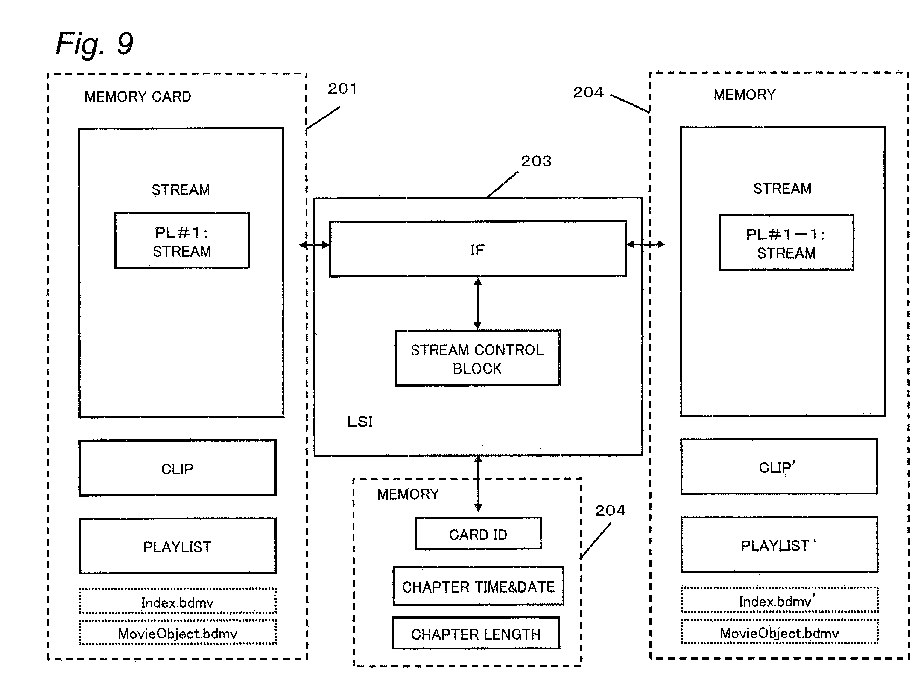

Further, the LSI 203 records the card ID of the memory card 201, and a chapter time and date and a chapter length of the last-introduced chapter in the memory 204 (S3). The chapter time and date is information representing a creating time and date of the chapter (in other words, shooting time and date of a video relating to the chapter). The chapter length is information representing a reproduction time length of the chapter. According to the above process, the playlist in the memory card 201 is introduced and recorded in the memory 204. Fig. 8 illustrates an example of a state of the memory 204 of the reproduction device 101 before the introducing process, and Fig. 9 illustrates an example of a state of the memory 204 of the reproduction device 101 after the introducing process.

The process at step S3 is described by giving a concrete example. Fig. 5 illustrates a structure of the playlist PL#1 having three chapters (PlayListMarkExt#1, PlayListMarkExt#2, and PlayListMarkExt#3). When a stream relating to the playlist PL#1 is introduced, the LSI 203 records a chapter time and date (shooting time and date) and a chapter length (reproduction time length) relating to the chapter introduced last as a stream in the memory 204 at step S3. That is to say, the LSI 203 records "PlayListMarkExt#3.Rec.Time&Date" of the playlist PL#1 as the chapter time and date in the memory 204, and records a value obtained by (Playitem#3.OUT_Time - PlayListMark#3.MarkTimeStamp) as the chapter length into the memory 204. As the chapter length, a value corresponding to the system clock is acquired. The chapter time and date and the chapter length acquired in such a manner are recorded in the memory 204.

Returning to Fig. 7, after the process at step S3, when creating dates of chapters included in a playlist are different from each other, the LSI 203 modifies management information in order to facilitate management of the video information in date unit (S9). That is to say, when the creating dates of the chapters in the playlist are different from each other, the LSI 203 modifies index.bdmv, the playlist, and the clip so as to record them in order to enable the management in the date unit. In Fig. 5, only the chapter with the creating date of January 5, 2010 is managed in the playlist PL#1. For this reason, the information of the playlist PL#1 is not modified, but a file name of the playlist is modified from "PL#1" to "PL#1-1" in order to facilitate the management in the device. At this time, information about MovieTitlePlayListPair of index.bdmv is changed.

In such a manner, the LSI 203 records a stream and management information in the memory 204, so as to introduce video information from the memory card 201 into the reproduction device 101 (namely, the memory 204) (see Fig. 9).

The process in the case where the determination is made at step S1 in the flowchart of Fig. 7 as "YES", namely, the determination is made that video information has been read from the memory card 201 is described below.

When new video information is added in the memory card 201 and the reproduction device 101 introduces difference information, the following process is executed.

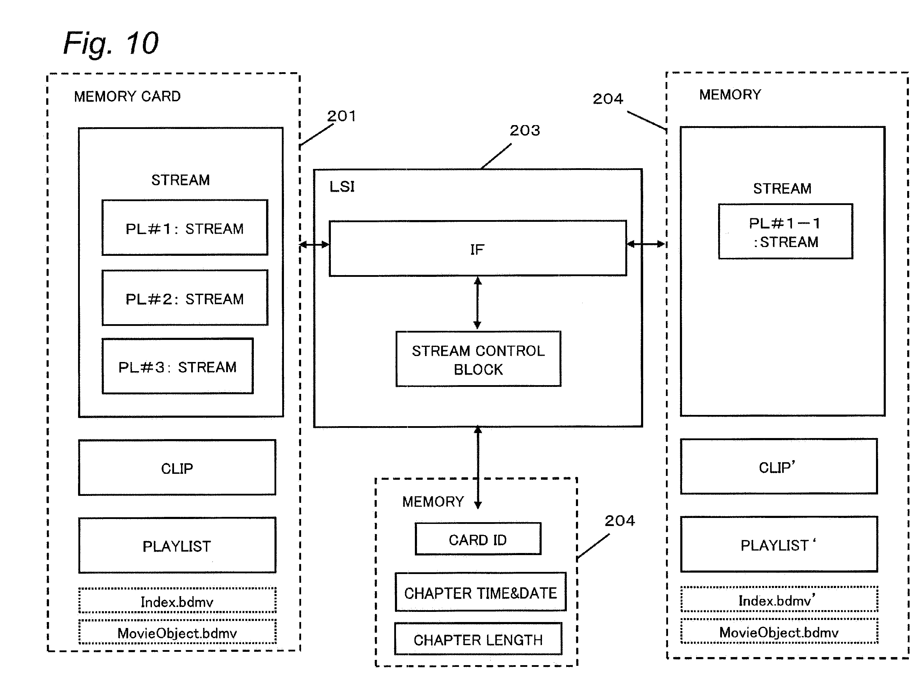

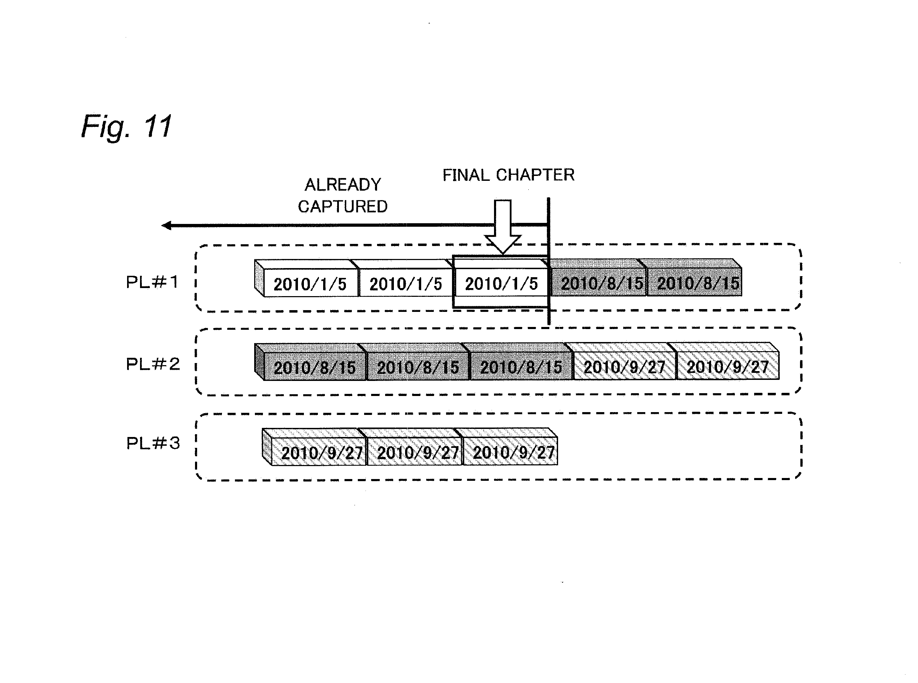

A case where the memory card 201 which records new video information shown in Fig. 10 is attached to the reproduction device 101 is described below as an example. In the example of Fig. 10, three playlists PL#1 to PL#3 are recorded in the memory card 201. Each of playlist PL#1, PL#2, and PL#3 in the memory card 201 includes chapters as shown in Fig. 11. A part of chapters included in the playlist PL#1 is recorded as a playlist PL#1-1 in the memory 204 of the reproduction device 101. PL#1-1 includes first to third chapters of the playlist PL#1 shown in Fig. 11. That is to say, the first to third chapters in the playlist PL#1 have been already introduced into the reproduction device 101.

With reference to Fig. 7, when it is determined that the card ID read from the memory card 201 indicates the card that was read previously (YES at S1), the LSI 203 reads management information (S4). At this time, the LSI 203 determines whether a final chapter (the last chapter in the chapters already introduced) can be detected from a playlist of the memory card 201 based on the chapter time and date and the chapter length recorded in the memory 204 (S5). The detection of the final chapter is concretely described below.

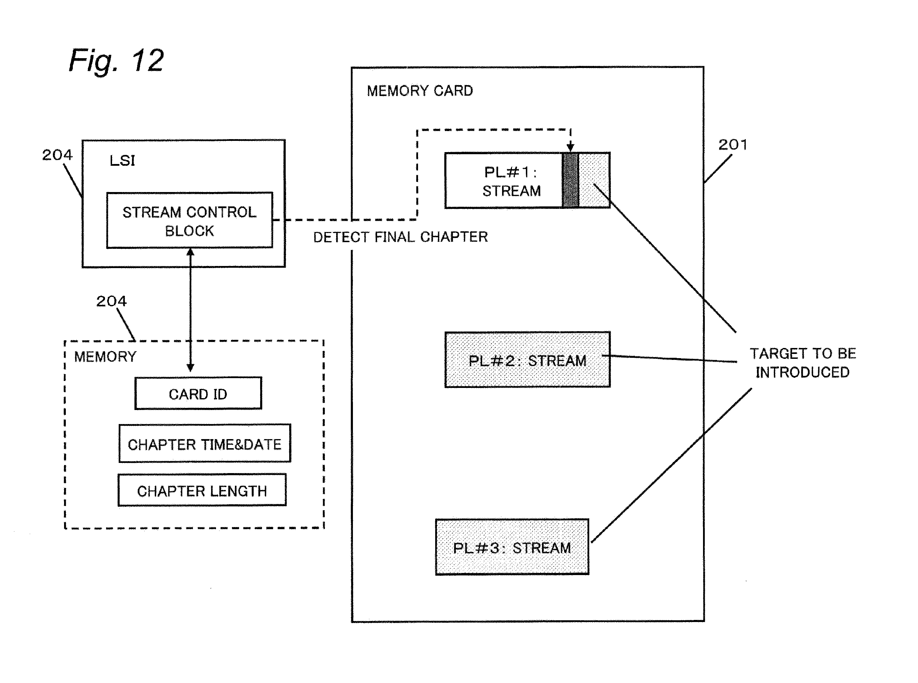

With reference to Fig. 12, a stream control block of the LSI 203 firstly searches for a chapter having the chapter time and date identical to the chapter time and date recorded in the memory 204. Concretely, the LSI 203 searches for PlayListMarkExt.Rec.Time&Date included in the playlist. At this time, the LSI 203 searches first the playlist PL#1 in ascending order, namely, starting from PlayListMarkExt#1 in ascending order. For example, the LSI 203 first searches the playlist PL#1, and when a chapter having the chapter time and date matching with the chapter time and date recorded in the memory 204 is not present, the LSI 203 next searches the playlist PL#2. When a chapter having the chapter time and date matching with the chapter time and date recorded in the memory 204 is not present in the playlist PL#2, the LSI 203 next searches the playlist PL#3. The LSI 203 repeats such a process so as to search all playlists present in the BDMV folder for a chapter having the chapter time and date identical to the chapter time and date recorded in the memory 204.

When a chapter having the matched chapter time and date is found in the above operation, the LSI 203 next determines matching of the chapter length, and determines whether the found chapter is a final chapter.

In concrete description, the reproduction device 101 has already introduced the chapters up to third one (PlayListMark#3) in playlist PL#1. For this reason, the LSI 203 detects the PlayListMark#3 based on the chapter time and date. The LSI 203 then compares the chapter length recorded in the memory 204 with the chapter length of PlayListMark#3(Playitem#3.OUT_Time - PlayListMark#3.MarkTimeStamp), so as to determine whether it is a final chapter. The chapter length of PlayListMark#3 is calculated according to (Playitem#3.OUT_Time - PlayListMark#3.MarkTimeStamp). When the chapter lengths match, the LSI 203 detects the chapter in PlayListMark#3 as a final chapter. When the chapter times and dates match but the chapter lengths do not match, the LSI 203 determines whether matching of a chapter length is carried out for a next chapter. This operation is repeated until a final chapter is found.

When detecting the final chapter in the process at step S5, the LSI 203 introduces the subsequent chapters as objects to be introduced (difference information) into the memory 204 (see S6 and Fig. 12).

On the other hand, when not detecting the final chapter in the process at step S5, the LSI 203 introduces all the streams in all the playlists (records in the memory 204) (S7).

After the process at steps S6 and S7, the LSI 203 records the chapter time and date and the chapter length of the final chapter in the introduced stream in the memory 204.

Finally, in order to facilitate the management of video information in the date unit, when chapters included in the introduced playlists have different creating dates, the LSI 203 modifies management information (S9). Concretely, the LSI 203 modifies management information to change the structure of the playlist so that the chapters included in the playlist have the same creating date.

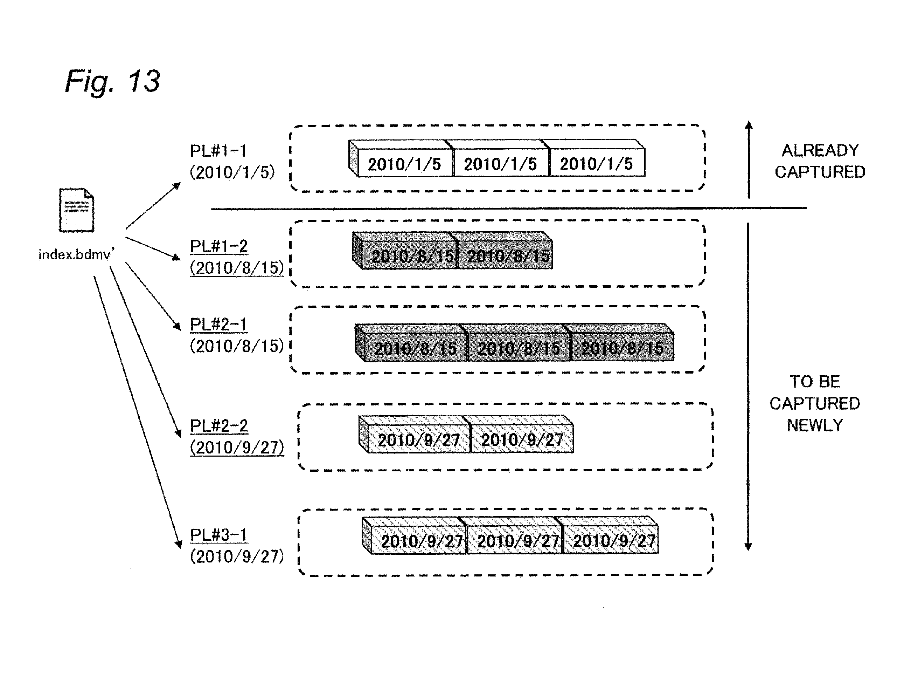

In the example of Fig. 11, chapters of January 5, 2010 and August 15, 2010 are present in the playlist PL#1, and chapters of August 15, 2010 and September 27, 2010 are present in the playlist PL#2. Therefore, the playlists PL#1 and PL#2 (namely, management information) are modified so that the chapters included in these playlists have the same creating date as shown in Fig. 13. The modification of the playlists is concretely described with reference to Figs. 11 and 13.

The modification of the playlists PL#1 is first described. As shown in Fig. 11, the chapter of January 5, 2010 and the chapter of August 15, 2010 are present as the chapters to be managed in the playlist PL#1. Since the chapter PL#1-1 (see Fig. 5) recorded in the memory 204 already includes the chapter of January 5, 2010, data to be newly managed in the playlist PL#1 is the chapter of August 15, 2010. For this reason, the LSI 203 prepares a playlist PL#1-2 for managing only the chapter of August 15, 2010 (see Fig. 13) by deleting PlayItem, PlayListMark and so on for managing the chapter of January 5, 2010. Since the playlist PL#1-2 manages the chapter of August 15, 2010, a creating time and date (PlayListMarExt#4.Rec.Time&Date) of a chapter to be managed in the playlist PL#1-2 is recorded in Rec.Time&Date of PlayListMeta. As a result, the creating date of the playlist in the playlist PL#1-2 is August 15, 2010. The playlist PL#1-2 manages only the chapters with the creating date of August 15, 2010, and thus further division of the playlist is not necessary.

The modification of the playlist PL#2 is described next. Since the chapters of August 15, 2010 and September 27, 2010 are present in the playlist PL#2, this playlist is divided into two. Concretely, the playlist PL#2-1 and the playlist PL#2-2 are prepared (see Fig. 13). In the playlist PL#2-1, a new playlist is prepared to manage the chapter of August 15, 2010. In the playlist PL#2-2, a new playlist is prepared to manage the chapter of September 27, 2010. Since the first chapter to be managed in the playlists PL#2-2 is not dated August 15, 2010 but dated September 27, 2010, the creating time and date of the chapter to be managed in the playlist PL#2-2 (PlayListMarExt#4.Rec.Time&Date) is recorded in Rec.Time&Date in PlayListMeta. As a result, the creating date of the playlist PL#2-2 is September 27, 2010.

In Fig. 11, only the chapter of September 27, 2010 is managed in the playlist PL#3. For this reason, the information in the playlist PL#3 is not modified, and the file name of the playlist is modified from "PL#3" into "PL#3-1" in order to facilitate the management in the device (see Fig. 13).

In this example (see Fig. 13), four new playlists are recorded. Here, index.bdmv manages the playlist PL#1-2, the playlist PL#2-1, the playlist PL#2-2, and the playlist PL#3-1 with MovieTitlePlayListPair.

The LSI 203 records streams and management information in the memory 204 in the above manner so as to introduce difference information of video information.

In this embodiment, not only a chapter time and date but also a chapter length is recorded. This is because the digital movie camera records Rec.Time&Date based on system time, and a plurality of chapters has the same creating date. For example, this is because when video information is recorded with the system time of the digital movie camera remaining initialized (0:00:00), the plurality of chapters has the same creating date sot that it would be impossible to discriminate introduced chapters from non-introduced chapters. Further, some of the digital movie cameras record only creating dates in Rec.Time&Date. In this case too, it would be impossible to discriminate introduced chapters from non-introduced chapters.

The reproduction device 101 in this embodiment introduces video information from the memory card 201 that manages plural pieces of video information in chapter unit and manages a plurality of chapters in one playlist. The reproduction device 101 has the memory 204 for storing video information, an acquiring section (the LSI 203) for acquiring video information from the memory card 201 so as to store it in the memory 204, and a recording section (the LSI 203) for recording information about a shooting date and information about a reproduction time length of the final chapter in the video information acquired by the acquiring section into the memory 204. In the memory card 201, the acquiring section detects a chapter having the shooting date and the reproduction time length identical to the shooting date and the shooting time length represented by the information about the shooting date and information about the reproduction time length stored in the memory 204. When detecting this chapter, the acquiring section acquires only chapters having shooting dates after the detected chapter in the playlist including the detected chapter from the memory card 201 so as to record them in the memory 204.

With the above constitution, introduced chapters are identified based on the chapter time and date and the chapter length, and thus the accurate discrimination of a boundary between introduced chapters and non-introduced chapters is enabled so that accuracy for introducing difference information can be improved.

Further, in this embodiment, playlists are divided and managed based on the chapter creating dates. This causes the management of video information according to dates to be easy.

### 7. Operation for Displaying List of Video Information

The reproduction device 101 creates information representing a list (a list of introduced video information) introduced in the above manner, and outputs information representing the list to the display device 102. The display device 102 displays the list of video information according to the information. At this time, the reproduction device 101 refers to the playlist so as to create a list which classifies video information according to date.

Concretely, the reproduction device 101 refers to Rec.Time&Date in PlayListMeta of the playlist to classify video information according to shooting date and create a list. In this embodiment, the reproduction device 101 can display a list which is classified according to date, independently of the video information introduced from the playlist of the pattern A and video information introduced from playlist of the pattern B. Concrete description is given below.

For example, an example where a list of video information introduced and recorded in the memory 204 shown in Figs. 6A and 6B is created is described.

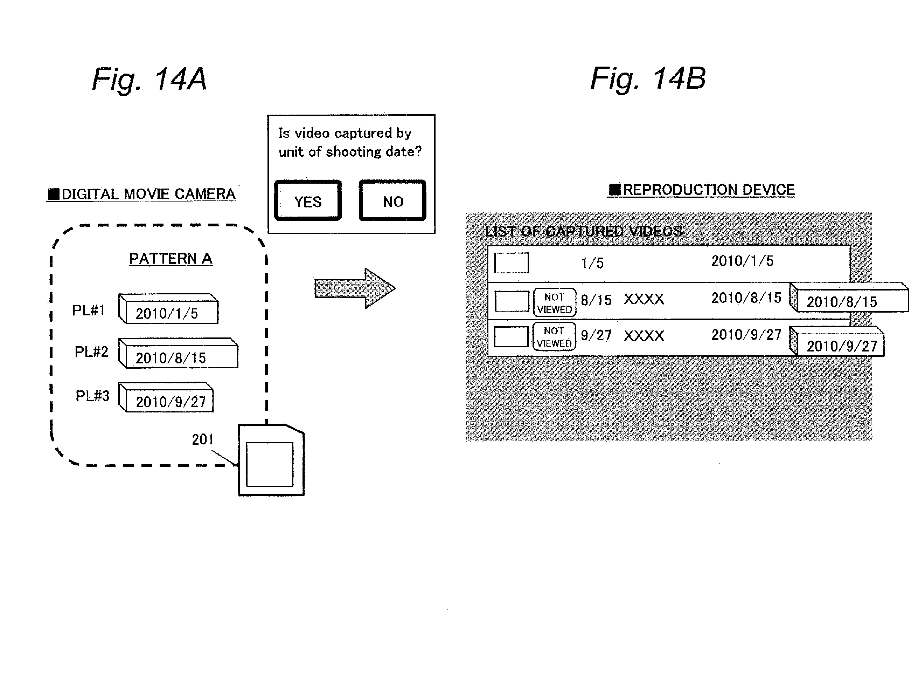

The video information introduced form the playlist of the pattern A shown in Fig. 6A by the reproduction device 101 is managed as the playlist PL#1, the playlist PL#2, and the playlist PL#3. In this case, the reproduction device 101 classifies the video information with reference to Rec.Time&Date in PlayListMeta of the playlists PL#1 to#3 (information about a creating time and date of a playlist). When playlists with the same creating date are present, the reproduction device 101 collectively displays them in a list. In the example of Fig. 6A, since the playlists PL#1 to #3 have different creating dates, playlists having the same creating date are not collectively displayed in a list, but a list of video information shown in Fig. 14B is created.

On the other hand, when the reproduction device 101 introduces video information from a playlist of the pattern B shown in Fig. 6B, as shown in Fig. 13, they are managed as the playlist PL#1-1, the playlist Pal#1-2, the playlist PL#2-1, the playlist PL#2-2, and playlist PL#3-1. In this case, the reproduction device 101 refers to Rec.Time&Date in PlayListMeta of the playlists PL#1-1 to 3-1, so as to classify video information. When a plurality of playlists with the same creating date are present, the reproduction device 101 collectively displays them as one piece of information.

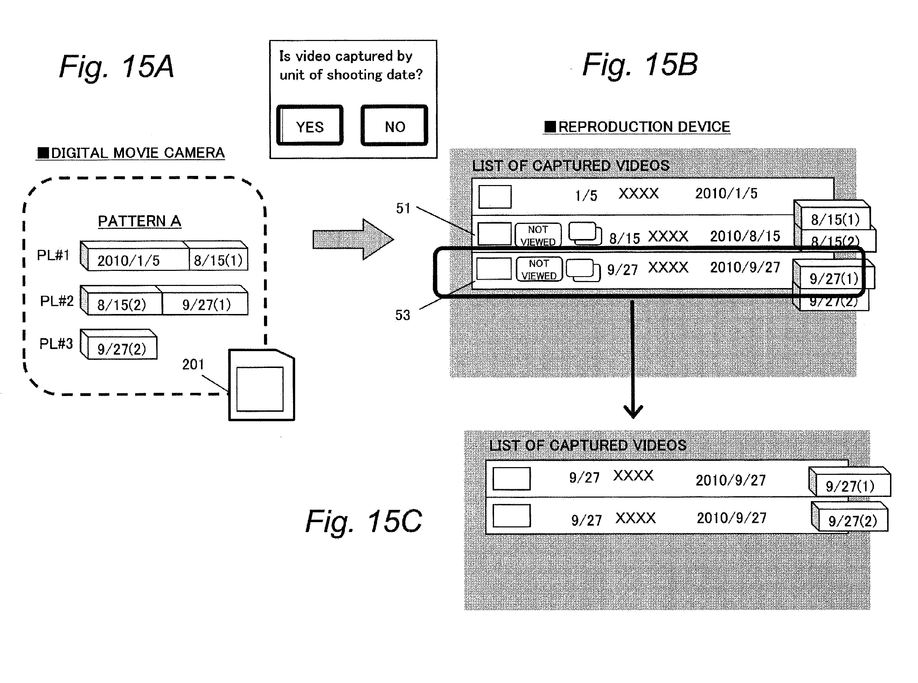

In the example of Fig. 13, the playlist PL#1-2 and the playlist PL#2-1 have the same creating date (August 15, 2010), and the playlist PL#2-2 and playlist PL#3-1 have the same creating date (September 27, 2010). For this reason, as shown in Fig. 15B, only each of items 51 and 53 is displayed for each of dates August 15, 2010 and September 27, 2010. For example, when the item 53 is selected, the playlist PL#2-2 dated September 27, 2010 ("9/27 (1) ") and the playlist PL#3-1 ("9/27 (2)") are further displayed as shown in Fig. 15C.

Wen the list of video information classified daily is displayed in the above manner, the user can easily find and view a video of desired date.

The reproduction device 101 can display the list classified daily independently of the video information introduced from the playlist of the pattern A or video information introduced from the pattern B. Since the classifying method is switched according to a pattern of video information, video information can be classified by an easier method in the reproduction device 101.

### Other Embodiment

The first embodiment is described as the embodiment. However, the embodiment is not limited to this. Therefore, other embodiments are collectively described below. The idea of the embodiment is not limited to one disclosed here, and can be applied also to suitably modified embodiments.

In the above embodiment, it is determined at step S1 in the flow of Fig. 7 whether the memory card has already been read. However this step is not always necessary.

Further, in the above embodiment, an introduced chapter (final chapter) is detected in consideration of the creating time and date of the chapter, but the introduced chapter may be detected in consideration of the creating date of the chapter instead of the creating time and date.

Further, when the reproduction device introduces the difference information therein, the final chapter cannot be occasionally found in the memory card even though the memory card has had a chance to be read the video information. This is because a chapter is occasionally deleted in the digital movie camera. In consideration of such a case, the process at step S7 may be changed. For example, when the LSI 203 does not detect a final chapter, it may determine a boundary of video information introduced in the previous time based on the information of the chapter time and date recorded in the memory 204, and may introduce information after the boundary as difference information. Concretely, the LSI 203 detects chapters, from the chapters included in the memory card 201, which have times and dates after and closest to those represented by the chapter time and date of the memory 204. For example, when the chapter time and date of the memory 204 is "January 16, 2010, 0:55", a chapter having the chapter time and date that is after and closest to this time (January 16, 2010, 0:55) is selected. The LSI 203 introduces data after the selected chapter, as the difference information. This is because the video information is recorded as files in an order of creating in the digital movie camera.

When the LSI 203 cannot detect a final chapter, a stream might be introduced redundantly in some cases. In such a case, in view of the capacity of the memory 204, the LSI 203 may partially delete the redundant stream to solve the redundancy. In another method, in view of user's convenience, the LSI 203 of the reproduction device 101 may control display so that redundant streams are not displayed on a list.

Further, in this embodiment, the LSI 203 records a value acquired according to (Playitem#3.OUT_Time-PlayListMark#3.MarkTimeStamp) as the chapter length in the memory 204. However, the present embodiment is not limited to this, and two pieces of information such as "Playitem#3.OUT_Time" and "PlayListMark#3.MarkTimeStamp" may be recorded as a value relating to the chapter length in the memory 204. The LSI 203 may compare "Playitem.OUT_Time" and "PlayListMark.MarkTimeStamp" of the chapter recorded in the memory card 201 using "Playitem#3.OUT_Time" and "PlayListMark#3.MarkTimeStamp" recorded in the memory 204 so as to detect the final chapter. This arrangement allows the LSI 203 to require no subtracting process for acquiring the chapter length.

As illustrating of the technique in the present disclosure, the embodiments are described above. For this reason, the accompanying drawings and detailed description are provided.

Therefore, the components described in the accompanying drawings and the detailed description include not only essential components for solving the problem but also components that are not essential for solving the problem in order to illustrate the technique. For this reason, even if such unessential components are described in the accompanying drawings and the detailed description, these unessential components should not be immediately recognized as being essential.

Further, since the above embodiments illustrate the technique of the present disclosure, various modifications, replacements, additions and omissions can be carried out within the scope of claims or its equivalent scope.

### Industrial Applicability

The present disclosure can be applied to a device for introducing video information recorded by a digital movie camera. Concretely, the present disclosure can be applied to recorders and personal computers with HDD.

### Description of Reference Characters

- 101: reproduction device (video information capturing device)
- 102: display device
- 201: memory card
- 202: memory card slot
- 203: LSI
- 204: memory
- 205: remote control receiving section
- 206: output section

## Claims

1. A video information capturing device for introducing video information therein from a first recording medium for managing plural pieces of video information in chapter unit and managing the plurality of chapters in one playlist, the video information capturing device comprising:
a second recording medium for storing video information;
an acquiring section for acquiring the video information from the first recording medium and storing the video information in the second recording medium; and
a recording section for recording information about a shooting date and information about a reproduction time length of a final chapter in the video information acquired by the acquiring section, in the second recording medium, wherein
the acquiring section searches the first recording medium for a chapter having the same shooting date and the same reproduction time length as those indicated by the information about the shooting date and the information about the reproduction time length stored in the second recording medium,
when the chapter is found, the acquiring section acquires, from the first recording medium, only a chapter having a shooting date later than that of the found chapter in a playlist including the found chapter, and records the acquired chapter in the second recording medium.

2. The video information capturing device according to claim 1, wherein when the chapter having the same shooting date and the same reproduction time length is not found from the video information in the first recording medium, the acquiring section determines a chapter to be acquired from the first recording medium, based on only the information about the shooting date.

3. The video information capturing device according to claim 1, wherein when the chapter acquired from the first recording medium is recorded in the second recording medium and thus redundant chapters are present in the second recording medium, the acquiring section deletes one of the redundant chapters to solve the redundancy.

4. The video information capturing device according to claim 1, wherein when the playlist stored in the first recording medium includes a plurality of chapters having different shooting dates, the recording section divides the playlist so that each of the divided playlist includes only the chapter having the same shooting date, and records the divided playlists in the second recording medium.

5. The video information capturing device according to claim 4, further comprising a display section for displaying a list of video information stored in the second recording medium,
wherein the display section displays an item relating to each of playlists.

6. The video information capturing device according to claim 5, wherein when a plurality of playlists having the same shooting date is present, the display section displays one item for the plurality of playlists.
